# EUROPEAN PATENT APPLICATION

(11) **EP 1 688 395 A1**
(43) Date of publication of application: **09.08.2006**
(21) Application number: 04792948.4
(22) Date of filing: 26.10.2004
(51) Int. Cl.: C02F 1/46, C25B 11/04

(54) **ELECTROLYSIS VESSEL AND APPARATUS FOR GENERATING ELECTROLYZED WATER**

(30) Priority: 11.11.2003 JP 2003381742; 07.05.2004 JP 2004138258
(71) Applicant: HONDA MOTOR CO., Ltd., Tokyo 107-8556 (JP)
(72) Inventor: MIYASHITA, Kohichi KABUSHIKI KAISHA HONDA GIJYUTSU, Wako-shi, Saitama 3510193 (JP)
(74) Representative: Cheyne, John Robert Alexander M.
(86) International application number: PCT/JP2004/015820
(87) International publication number: WO 2005/044738

(57) **Abstract**

Provided is an electrolysis cell and an electrolyzed water producing equipment which are each small in size, has excellent electrolysis efficiency and can reduce an anion concentration in acidic electrolyzed water. The electrolysis cell is equipped with electrolysis rooms 10a and 10b located opposite to each other via an ion permeable membrane 2, raw water supply units 11a and 11b, electrodes 3a and 3b disposed with the membrane interposed therebetween, and electrolyzed water discharge units 12a and 12b. The membrane 2 is an anion permeable film. The electrodes 3a and 3b are formed so as to firmly adhere to both surfaces of the anion permeable membrane 2 and expose a portion of the anion permeable membrane 2. Only raw water fed to the electrolysis room 10b on the cathode side contains an electrolyte. The electrodes 3a and 3b are porous and they each has an electrode base material made of a powdery titanium compound such as TiC or TiN, a catalyst such as platinum black or iridium black and a binder such as PVA. The electrodes 3a and 3b may be mesh-shaped or comb-shaped. The electrodes 3a and 3b are formed by applying a conductive paste containing conductive powders onto the surfaces of the anion permeable membrane 2, followed by heating or pressurization.

## Description

### TECHNICAL FIELD

The present invention relates to an electrolysis cell for electrolyzing raw water fed to a pair of electrolysis rooms located opposite to each other via an ion permeable membrane by applying a voltage to a pair of electrodes disposed in the electrolysis rooms, respectively, via the membrane; and an electrolyzed water producing equipment for generating electrolyzed water by using the electrolysis cell.

### BACKGROUND ART

As an electrolyzed water producing equipment, known are equipments for producing electrolyzed water by using an electrolysis cell equipped with a pair of electrolysis rooms located opposite to each other via an ion permeable membrane and a pair of electrodes disposed in the respective electrolysis rooms with the membrane interposed therebetween. In the above-described electrolyzed water producing equipment, raw water containing an electrolyte is fed to each of the electrolysis rooms and a voltage is applied to the pair of electrodes to electrolyze the raw water, whereby acidic electrolyzed water can be produced in the electrolysis room on the anode side and alkaline electrolyzed water can be produced in the electrolysis room on the cathode side.

In the electrolysis cell of the electrolyzed water producing equipment, the electrodes are usually placed away from the membrane. The above-described constitution however is accompanied by the problem that an electrical resistance between the electrodes is large owing to a wide space between the electrodes disposed with the membrane interposed therebetween and an electrolysis efficiency is therefore low relative to the applied power.

As a solution for the above-described problem, proposed is, for example, an electrolysis cell in which electrodes obtained by superimposing a porous electrode base material made of a plain weave mesh on a punched metal are brought into contact with a membrane to narrow the distance between these electrodes and at the same time, raw water is circulated inside of the porous electrode base material to increase the contact area between the raw water and electrodes (refer to, for example, Japanese Patent Laid-Open No. 2001-73177). By employing the above-described electrolysis cell, an electrolysis efficiency relative to the applied power can be heightened to some extent. In the above-described electrolysis cell, however, a circulation resistance is high because the raw water is circulated inside of the porous electrode base material and an increase in the production amount of electrolyzed water per hour inevitably leads to a size increase of the equipment. In addition, in the above-described electrolysis cell, an average electrolysis current density in the electrodes is from 20 to 30 mA/cm² and an electrolysis efficiency relative to the applied voltage cannot be improved fully.

In the above-described electrolyzed water producing equipment, it is possible to produce acidic electrolyzed water containing hypochlorous acid (HC10) in the electrolysis room on the anode side by using a chloride such as sodium chloride or potassium chloride as the electrolyte and supplying the raw water containing the chloride to at least the electrolysis room on the anode side. The above-described acidic electrolyzed water has a strong bactericidal property and oxidizing property so that it is used for the purposes of sterilization, disinfection, deodorization, and the like.

When a cation exchange membrane is used as the above-described membrane, raw water containing a chloride must be fed to the electrolysis room on the anode side in order to produce the hypochlorous acid. By this, however, a large amount of chlorine ions remains in the acidic electrolyzed water inconveniently. Chlorine ions have a property of breaking a film formed on a metal surface, thereby promoting corrosion. When acidic electrolyzed water having a large amount of chlorine ions remained therein is used for a long period of time, there is a possibility of causing corrosion of piping system of the electrolyzed water producing equipment, metal parts to be sprayed and the like.
Patent Document 1: Japanese Patent Laid-Open No. 2001-73177

### DISCLOSURE OF THE INVENTION

### PROBLEMS TO BE SOLVED BY THE INVENTION

An object of the present invention is to overcome such inconveniences and provide an electrolysis cell which is small in size, has an excellent electrolysis efficiency and can supply, from its electrolysis room on a cathode side, the above-described acidic electrolyzed water containing hypochlorous acid in an amount effective for sterilization, disinfection, deodorization or the like; and an electrolyzed water producing equipment for generating electrolyzed water by using the electrolysis cell.

### MEANS FOR SOLVING THE PROBLEMS

With a view to attaining the above-described object, the electrolysis cell according to the present invention is characterized in that in the electrolysis cell comprising a pair of electrolysis rooms located opposite to each other via an ion permeable membrane, raw water supply units for supplying the respective rooms with raw water, a pair of electrodes disposed in the respective electrolysis rooms with the membrane interposed therebetween, and electrolyzed water discharge units for taking out the electrolyzed water, which has been obtained by applying a voltage to these electrodes to electrolyze the raw water fed to the respective rooms by the raw water supply units, from the electrolysis rooms; the membrane is an anion exchange membrane, the electrodes adhere firmly to both surfaces of the anion exchange membrane to form a membrane-electrode structure through which anions can permeate, and at least the raw water fed to the electrolysis room on the cathode side contains a chloride as an electrolyte.

The electrolysis cell of the present invention is constituted so that when the raw water is fed to the respective electrolysis rooms by the raw water supply units, at least the raw water fed to the electrolysis room on the cathode side contains a chloride as an electrolyte. By applying a voltage to the electrodes formed on the both surfaces of the anion exchange membrane to electrolyze the raw water, the raw water is reduced into a hydrogen gas and hydroxyl (OH⁻) ions in the electrolysis room on the cathode side, whereby electrolyzed water which is alkaline due to the hydroxyl ions (which will hereinafter be called "alkaline electrolyzed water" simply) is produced.

In the electrolysis room on the anode side, an oxygen gas and hydrogen ions (H⁺) are produced by the oxidation of water, while chlorine (Cl₂) is generated by the oxidation of chlorine ions (C1⁻). The resulting chlorine reacts with water to generate hypochlorous acid. As a result, electrolyzed water which is acidic due to the hydrogen ions (which will hereinafter be called "acidic electrolyzed water" simply) is produced.

The alkaline electrolyzed water and acidic electrolyzed water are taken out from the electrolysis cell by the respective electrolyzed water discharge units.

According to the electrolysis cell of the present invention, the two electrodes forming a pair adhere firmly to the both surfaces of the anion exchange membrane, respectively and thus, they are formed integrally with the anion exchange membrane so that an electrical resistance between these two electrodes is small and an electrolysis efficiency is high relative to the applied power. In addition, according to the electrolysis cell of the present invention, the electrodes are formed integrally with the anion exchange membrane so that the number of parts used for the cell is small, which simplifies the circulation structure of the raw water.

As a result, a circulation resistance of the raw water decreases, and a production amount of electrolyzed water per hour increases, which enables reduction in the size of the equipment. Moreover, according to the electrolysis cell of the present invention, the electrical resistance between the two electrodes is small and a high electrolysis efficiency can be attained so that a load on a power supply is small, which makes it possible to reduce the capacity of the power supply.

In the electrolysis cell of the present invention, the membrane is made of an anion exchange membrane. Upon the electrolysis, chlorine ions generated in the electrolysis room on the cathode side transfer to the electrolysis room on the anode side via the anion exchange membrane and become chlorine molecules while supplying electrons to the electrode in the vicinity of the surface of the anion exchange membrane on the anode side. The chlorine molecules thus obtained react with water in the membrane-electrode structure and water in the vicinity thereof to produce hypochlorous acid.

According to the electrolysis cell of the present invention, since at least the raw water fed to the electrolysis room on the cathode side contains a chloride as an electrolyte, the acidic electrolyzed water containing hypochlorous acid in an amount effective for sterilization, disinfection, deodorization or the like is available from the electrolysis room on the anode side.

In the electrolys is cell of the present invention, it is only necessary that at least the raw water fed to the electrolysis room on the cathode side contains a chloride as the electrolyte. The raw water fed to the respective electrolysis rooms on the cathode side and anode side however may contain a chloride as the electrolyte. In this case, when electrolysis is performed, chlorine (Cl₂), in addition to the oxygen gas and hydrogen ions, is generated in the electrolysis room on the anode side and as a result of the reaction between the chlorine with water, hypochlorous acid (HC10) is produced also in this room. By including both the resulting hypochlorous acid and that generated from chlorine ions transferring from the cathode side to the anode side of the electrolysis room, the amount of hypochlorous acid contained in the acidic electrolyzed water therefore becomes large.

In the electrolysis cell of the present invention, only the raw water fed to the electrolysis room on the cathode side may contain the above-described electrolyte. In this case, when the raw water is electrolyzed in the electrolysis cell of the present invention, oxidation of water and oxidation of chlorine ions (Cl⁻) which have permeated through the anion exchange membrane occur in the electrolysis room on the anode side because no chloride is contained in the raw water fed to the electrolysis room on the anode side. Most of the chlorine ions which have permeated are spent for the reaction in the vicinity of the electrode so that there scarcely exist chlorine ions derived from the raw water.

Hypochlorous acid generated in the electrolysis room on the anode side is therefore derived from only the chlorine ions which have transferred from the electrolysis room on the cathode side and chlorine ions emitted to the acidic electrolyzed water relate to only the production of hypochlorous acid. As a result, it is possible to yield acidic electrolyzed water containing a large amount of hypochlorous acid effective for sterilization, disinfection, deodorization or the like and at the same time, capable of reducing a chlorine ion concentration, thereby suppressing corrosion or the like of metals by the chlorine ions.

The electrolysis cell of the present invention is characterized in that the electrodes are each a porous material made of conductive powders. The porous material has pores having, for example, a diameter of several µm so that even if the whole surface of the anion exchange membrane is covered with the electrode, the anion exchange membrane is exposed at portions facing to the pores.

As a result, in the electrolysis room on the cathode side, the electrodes can cause permeation of the resulting anions derived from the electrolyte by bringing them into contact with the anion exchange membrane at the exposure portions. In the electrolysis room on the anode side, on the other hand, the electrodes can emit molecules generated in the vicinity of the surface of the anion exchange membrane into the acidic electrolyzed water via the pores.

The electrodes are each preferably a porous material having an electrode base material made of a powdery titanium compound, a catalyst dispersed in the electrode base material and a binder for binding the electrode base material with the catalyst and formed integrally with the membrane. The electrodes may each be a carbonaceous. When the electrode base material made of a powdery titanium compound and the catalyst dispersed in the electrode base material are bound via the binder, however, they are able to have excellent electrochemical stability.

Examples of the titanium compound include titanium carbide and titanium nitride. Examples of the catalyst include platinum black and iridium black. As the catalyst, the platinum black and iridium black may be used either singly or as a mixture of the platinum black and iridium black at a certain ratio.

In the electrolysis cell of the present invention, the electrode may be mesh-shaped or comb-shaped. In this case, the anion exchange membrane is exposed at the spaces of the mesh or comb. The mesh-shaped or comb-shaped electrodes are similar in the effect at the exposure portions to that of the above-described electrodes made of a porous material.

In the conventional electrodes, flow of an electric current is concentrated on the end portions of the electrodes and charges are therefore frequently exchanged at these portions, which phenomenon is known as "edge effect". The above-described mesh-shaped or comb-shaped electrodes, on the other hand, have many end portions so that they are advantageous in the exchange of charges, which leads to a better electrolysis efficiency.

Since the mesh-shaped or comb-shaped electrodes can expose the anion exchange membrane from the spaces of their mesh or comb, they may be a dense solid having substantially no pores. They may however be the above-described porous material made of conductive powders.

The electrodes made of the above-described porous material formed from conductive powders are characterized by that they are formed by applying a conductive paste containing conductive powders onto the surface of the anion exchange membrane, followed by heating or pressurization. The electrodes can be made into a desired shape easily by applying the conductive paste onto the surface of the anion exchange membrane by printing or the like means so that they are suited for mass production. For the formation of the electrodes, either one or both of heating and pressurization may be conducted after applying the conductive paste onto the surface of the anionic exchange membrane. In the latter case, heating may be followed by pressurization.

The electrolyzed water producing equipment of the present invention is characterized by that electrolyzed water is produced using the above-described electrolysis cell. The electrolyzed water producing equipment of the present invention is equipped with the above-described electrolysis cell so that size reduction and weight reduction of the whole equipment constitution can be accomplished.

### BEST MODE FOR CARRYING OUT THE INVENTION

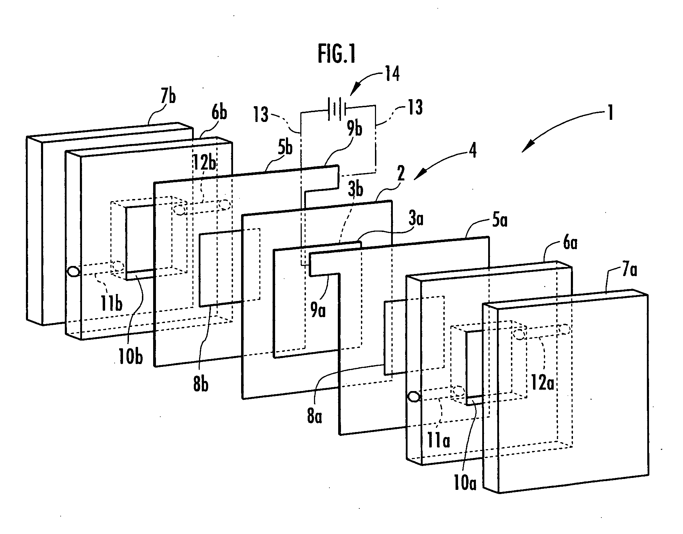

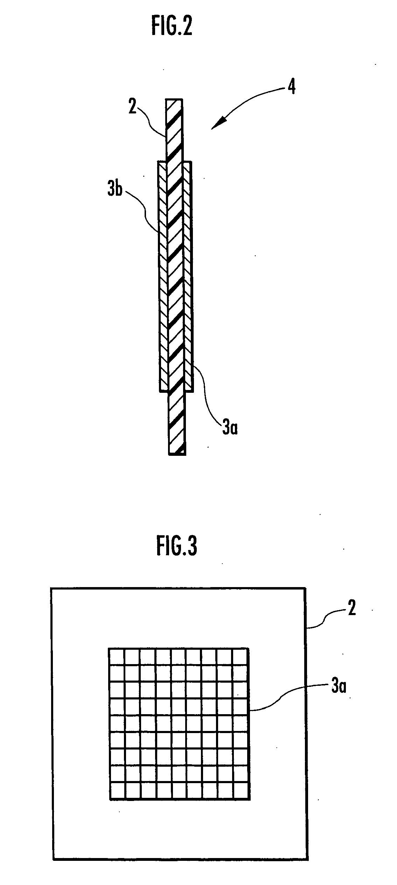

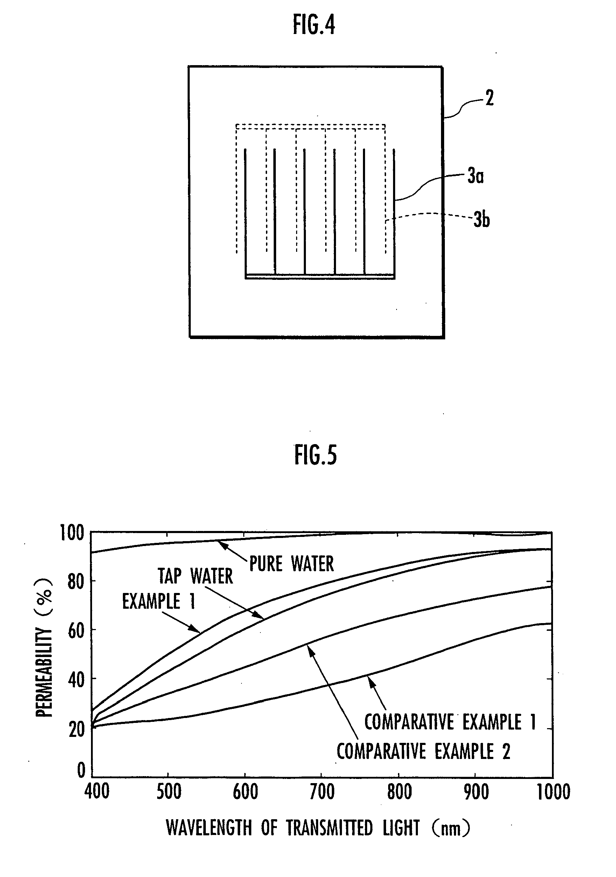

Embodiment of the present invention will next be described more specifically referring to accompanying drawings. FIG. 1 is an assembly drawing of an electrolysis cell according to an embodiment of the present invention; FIG. 2 is a schematic cross-sectional view of a membrane-electrode structure of the electrolysis cell shown in FIG. 1; FIGS. 3 and 4 are plan views illustrating another example and a further example of a membrane-electrode structure, respectively; and FIG. 5 is a graph showing spectra of the amount of transmitted light when the acidic electrolyzed water obtained in the electrolysis cell illustrated in FIG. 1 is clouded by the formation of a white precipitate of silver chloride in the water.

As illustrated in FIG. 1, the electrolysis cell 1 according to this embodiment has a constitution in which current collector plates 5a and 5b, spacers 6a and 6b, and outer plates 7a and 7b are superposed on both sides of a membrane-electrode structure 4 having film-shaped electrodes 3a and 3b formed on the both surfaces of an anion exchange membrane 2. The membrane-electrode structure 4, current collector plates 5a and 5b, spacers 6a and 6b and outer plates 7a and 7b are fastened by a bolt inserted into a through-hole and a nut to be fitted to the bolt which are not illustrated.

The current collector plates 5a and 5b are each made of a metal foil such as aluminum. They are equipped, at the center thereof, with window portions 8a and 8b for exposing the electrodes 3a and 3b and are in contact with the electrodes 3a and 3b at the periphery of the window portions 8a and 8b. The current collector plates 5a and 5b have, at the upper end thereof, terminal portions 9a and 9b, respectively.

The spacers 6a and 6b have, at the center thereof, hollow portions which are communicated with the window portions 8a and 8b of the current collector plates 5a and 5b and these hollow portions serve as electrolysis rooms 10a and 10b. The spacers 6a and 6b are equipped with water supply holes 11a and 11b for supplying raw water to the electrolysis rooms 10a and 10b and the water supply holes 11a and 11b are connected to an unillustrated raw water supply unit such as raw water tank. The spacers 6a and 6b are equipped with drain holes 12a and 12b for taking out electrolyzed water thus produced in the electrolysis rooms 10a and 10b and the drain holes 12a and 12b are connected to an unillustrated water storage tank or the like.

The outer plates 7a and 7b are blind patches serving as an end plate and they close the hollow portions of the spacers 6a and 6b therewith to form the electrolysis rooms 10a and 10b.

The terminal portions 9a and 9b exist as ledges, in directions which are different from each other, from the upper end portions of the current collector plates 5a and 5b and they are connected to a power supply 14 by a conductor 13.

In the above-described electrolysis cell 1, the membrane-electrode structure 4 is equipped with film-shaped electrodes 3a and 3b formed in a rectangular shape on both surface sides of the anion exchange membrane 2 as illustrated in FIG. 2. As the anion exchange membrane 2, an anion exchange membrane made of a hydrocarbon polymer such as "Aciplex" (trade name; product of Asahi Kasei) or "Selemion" (trade name; product of Asahi Glass) can be used.

The electrodes 3a and 3b are each a porous material containing an electrode base material, catalyst and binder.

As the electrode base material, for example, titanium compounds such as titanium carbide (TiC) and titanium nitride (TiN) can be used. The electrode base material may be a carbonaceous material, but the carbonaceous material sometimes elutes in raw water during electrolysis and decreases the lifetime of the electrode. The above-described titanium compound, on the other hand, has good electroconductivity and in addition, is electrochemically stable and is slightly soluble in raw water during electrolysis compared with carbon. Accordingly, the electrodes 3a and 3b using the titanium compound as its base material are able to have a sufficiently long lifetime.

Examples of the catalyst include platinum black and iridium black. As the catalyst, these platinum black and iridium black may be used either singly or as a mixture at a certain ratio.

The above-described binder serves to bind the electrode base material and the catalyst each other. Examples of such a binder include polyvinyl alcohol (PVA), polyvinyl chloride (PVC), polymethyl methacrylate (PMMA), polystyrene (PS) and cellulose acetate (CA).

The electrodes 3a and 3b may contain, in addition to the above-described base material and catalyst, a subsidiary component such as activated charcoal, conductive carbon and metal, each in the powdery form.

The electrodes 3a and 3b adhere firmly to the ion permeable membrane 2 and are formed integrally with the ion permeable membrane 2 by applying a paste, which has been obtained by dispersing the catalyst in the electrode base material and then mixing the dispersion with the binder, onto both surfaces of the ion permeable membrane 2 into a predetermined shape and then heating and/or pressurizing the resulting membrane. The above-described application can be effected, for example, by printing, drawing or the like method. In the above-described paste, polyvinyl alcohol serves as both a binder and a solvent.

The electrodes 3a and 3b are formed using powders such as electrode base material and catalyst so that they are porous with pores having a diameter of several µm. The anion exchange membrane 2 is exposed at portions which face the pores.

In the membrane-electrode structure 4, the anion exchange membrane 2 has a thickness of from 50 to 200 µm. The electrodes 3a and 3b are formed to give their dry film thickness of from 30 to 200 µm by the above-described method.

When the electrode 3a is used as an anode and the electrode 3b is used as a cathode in the electrolysis cell 1 according to this embodiment, for example, electricity is applied to the electrodes 3a and 3b by the power supply 14 while supplying the electrolysis room 10a with distilled water as electrolyte-free raw water via the water supply hole 11a and supplying the electrolysis room 10b with brine (aqueous solution of sodium chloride) as electrolyte-containing raw water via the water supply hole 11b. As a result, acidic electrolyzed water containing hypochlorous acid is produced in the electrolysis room 10a and the resulting acidic electrolyzed water is taken out via the drain hole 12a. On the other hand, alkaline electrolyzed water is produced in the electrolysis room 10b and the resulting alkaline electrolyzed water is taken out via the drain hole 12b.

At this time, the electrodes 3a and 3b adhere firmly to both surface of the anion exchange membrane 2 and are formed integrally with the anion exchange membrane 2. The space between these two electrodes is so narrow that a resistance between the electrodes is small, which enables efficient electrolysis at a low voltage. The electrolysis rooms 10a and 10b are separated by the anion exchange membrane 2. Distilled water is fed to the electrolysis room 10a, while brine is fed to the electrolysis room 10b so that acidic electrolyzed water containing hypochlorous acid available in the electrolysis room 10a has a residual chlorine ion concentration as small as that of tap water.

In the above-described embodiment, film-shaped electrodes 3a and 3b made of a porous material is disposed in the rectangular shape on both surfaces of the anion exchange membrane 2. The shape of the electrodes 3a and 3b is not limited thereto but it may be a mesh as illustrated in FIG. 3 or may be a comb as illustrated in FIG. 4. When the electrodes 3a and 3b are comb-shaped, the electrodes 3a and 3b (shown by a hidden line in FIG. 4) may be placed so as not to overlap each other.

When the electrodes 3a and 3b are mesh-shaped or comb-shaped, the anion exchange membrane 2 is exposed from the space of the mesh or comb so that they are not necessarily porous. Alternatively, they may be a dense solid having no pores therein. The electrodes 3a and 3b which are porous similar to those illustrated in FIG. 1 are however advantageous because the mesh or comb can be formed easily by applying the paste to the anion exchange membrane 2 by the method such as screen printing.

The electrolysis cell 1 according to the above-described embodiment can constitute an electrolyzed water producing equipment by equipping the cell with the power supply 14 for supplying the electrodes 3a and 3b with electricity and peripheral equipments such as controllers for controlling the operation of the raw water supply unit or the like.

Examples and Comparative Examples of the present invention will next be described.

### Example 1

In this Example, the area of the electrodes 3a and 3b facing the electrolysis rooms 10a and 10b was set at 16 cm². Distilled water and brine (aqueous solution of sodium chloride) having a concentration of 0.8 g/L were fed to the electrolysis room 10a on the anode side and the electrolysis room 10b on the cathode side, respectively each at a flow rate of 16 mL/min and a constant current of 0.5A was applied to the electrodes 3a and 3b to effect electrolysis.

At the time, the voltage was approximately 7V, acidic electrolyzed water produced in the electrolysis room 10a had a pH of 1.94 and an effective chlorine concentration was 50 ppm. The results are shown in Table 1.

The above-described effective chlorine concentration was determined by adding 0.5 mL of a 0.1 mole/L silver nitrate solution dropwise to 5 mL of the acidic electrolyzed solution to form a white precipitate of silver chloride and measuring the amount of transmitted light of the turbid solution. The spectra of the amount of transmitted light are shown in FIG. 5. The spectra of the amount of transmitted light are measured in an exactly similar manner to the above-described one except for the use of pure water or tap water instead of the acidic electrolyzed water is also shown in FIG. 5.

### [Comparative Example 1]

In this Comparative Example, electrolysis was performed in an exactly similar manner to the above-described one except an anion exchange membrane 2 having, on both surfaces thereof, no electrodes 3a and 3b formed was used, platinum electrodes were placed on the sides of outer plates 7a and 7b of electrolysis rooms 10a and 10b, and these platinum electrodes are connected to current collector plates 5a and 5b. The platinum electrodes are placed so as to prevent them from contacting with the anion exchange membrane 2.

At the time, the voltage was approximately 17V, acidic electrolyzed water produced in the electrolysis room 10a had a pH of 1.91 and an effective chlorine concentration was 55 ppm. The results are shown in Table 1.

The effective chlorine concentration was determined in an exactly similar manner to the above-described one by forming white precipitates of silver chloride in the acidic electrolyzed water and measuring the amount of transmitted light of the turbid solution. The spectra are shown in FIG. 5.

### [Comparative Example 2]

In this Comparative Example 2, electrolysis was performed in an exactly similar manner to that of Comparative Example 1 except that the brine was fed to both of the electrolysis rooms 10a and 10b.

At the time, the voltage was approximately 11V, acidic electrolyzed water produced in the electrolysis room 10a had a pH of 2.22 and an effective chlorine concentration was 120 ppm. The results are shown in Table 1.

The effective chlorine concentration was determined in an exactly similar manner to the above-described one by forming white precipitates of silver chloride in the acidic electrolyzed water and measuring the amount of transmitted light of the turbid solution. The spectra are shown in FIG. 5.

**[Table 1]**

| | Voltage for electrolysis (V) | pH | Effective chlorine concentration (ppm) |
|---|---|---|---|
| Example 1 | Approximately 7 | 1.94 | 50 |
| Comparative Example 1 | Approximately 17 | 1.91 | 55 |
| Comparative Example 2 | Approximately 11 | 2.22 | 120 |

From Table 1, it has been understood that when the electrolysis cell 1 (Example 1) of the present invention equipped with the electrodes 3a and 3b adhering firmly to both surfaces of the anion exchange membrane 2 and formed integrally with the anion exchange membrane 2 is used, electrolysis can be performed at a lower voltage with a better electrolysis efficiency than electrolysis in an electrolysis cell equipped with electrodes separated from the anion exchange membrane 2 (Comparative Examples 1 and 2).

From Table 1 and FIG. 5, it has been understood that when the electrolysis cell 1 (Example 1) of the present invention which circulates electrolyte-containing raw water (brine) only in the electrolysis room 10b on the cathode side by using the anion exchange membrane 2, the chlorine ion concentration is almost as low as that of tap water and is much lower than that when raw water (brine) containing an electrolyte is fed to both of the electrolysis rooms 10a and 10b (Comparative Example 2).

### Example 2

In this Example, a paste mixture was prepared by mixing an electrode base material, a catalyst and a binder at a weight ratio of 100:5:7. Titanium carbide (TiC) of 325 mesh or less was used as the electrode base material, while a 3:7 (weight ratio) mixture of platinum black and iridium black was used as the catalyst. As the binder, a solution obtained by dissolving polyvinyl alcohol having a saponification ratio of 100% in a water/ethanol mixed solvent (volumetric ratio, 1:1) at a concentration of 2 wt.% was used. The paste mixture had a viscosity of from 15 to 25 cps.

A membrane-electrode structure 4 was then formed by applying the paste mixture onto an anion exchange membrane ("Selemion (trade name) AMV", product of Asahi Glass) having a thickness of about 100 µm, which was used as the ion permeable membrane 2, drying, and heating and pressurizing at 80°C and 10 MPa for 30 minutes. As a result of measurement of the surface resistance of the electrolyzed water producing electrodes 3a and 3b in the resulting membrane-electrode structure 4 by a two-probe method, it was 20 Ωcm or less.

The membrane-electrode structure 4 obtained in this Example was used for the electrolysis cell 1 illustrated in FIG. 1. A batch-system electrolysis was then performed by feeding a 0.01M KCl solution and pure water to the cathode side and anode side, respectively and applying a voltage of 4V between the electrolyzed water producing electrodes 3a and 3b. As a result, bactericidal acidic water having an effective chlorine concentration of 80 ppm and pH of 4.0 was obtained from the anode side. At the time, an average electrolysis current density was 111 mA/cm², which was much superior to the average electrolysis current density in an electrolysis cell using the conventional electrodes, that is, from 20 to 30 mA/cm².

### BRIEF DESCRIPTION OF THE DRAWINGS

[FIG. 1] An assembly drawing illustrating one constitution example of an electrolysis cell according to the present invention.
[FIG. 2] A schematic cross-sectional view of a membrane-electrode structure of the electrolysis cell shown in FIG. 1.
[FIG. 3] A plan view illustrating another example of a membrane-electrode structure.
[FIG. 4] A plan view illustrating a further example of a membrane-electrode structure.
[FIG. 5] A graph showing spectra of the amount of transmitted light when acidic electrolyzed water obtained in the electrolysis cell shown in FIG. 1 is clouded by forming white precipitates of silver chloride in the water. Explanation of Reference Signs in Drawings 1: electrolysis cell, 2: anion exchange membrane, 3a,3b: electrodes, 10a,10b: electrolysis rooms, 11a,11b: raw water supply units, 12a,12b: electrolyzed water discharge units.

## Claims

1. An electrolysis cell comprising a pair of electrolysis rooms located opposite to each other via an ion permeable membrane, raw water supply units for supplying the rooms with raw water, a pair of electrodes disposed in the respective electrolysis rooms with the membrane interposed therebetween, and electrolyzed water discharge units for taking out electrolyzed water, which has been obtained by applying a voltage to the electrodes to electrolyze the raw water fed to the respective rooms by the raw water supply units, from the electrolysis rooms, wherein:
the membrane is an anion exchange membrane, the electrodes adhere firmly to both surfaces of the anion exchange membrane to form a membrane-electrode structure through which anions can permeate, and at least the raw water fed to the electrolysis room on the cathode side contains a chloride as an electrolyte.

2. An electrolysis cell according to Claim 1, wherein the raw water fed to the both electrolysis rooms contains the electrolyte.

3. An electrolysis cell according to Claim 1, wherein only the raw water fed to the electrolysis room on the cathode side contains the electrolyte.

4. An electrolysis cell according to Claim 1, wherein the electrodes are each a porous material made of conductive powders.

5. An electrolysis cell according to Claim 4, wherein the electrodes are formed by applying a conductive paste containing conductive powders onto the surface of the anion exchange membrane, followed by heating or pressurization.

6. An electrolysis cell according to Claim 4, wherein the electrodes each contains an electrode base material made of a powdery titanium compound, a catalyst dispersed in the electrode base material and a binder for binding the electrode base material with the catalyst and is a porous material formed integrally with the membrane.

7. An electrolysis cell according to Claim 6, wherein the titanium compound is titanium carbide or titanium nitride.

8. An electrolysis cell according to Claim 6, wherein the catalyst is platinum black or iridium black.

9. An electrolysis cell according to Claim 1, wherein the electrodes are mesh-shaped or comb-shaped.

10. An electrolysis cell according to Claim 9, wherein the electrodes are each prepared by applying a conductive paste containing conductive powders onto the surface of the anion exchange membrane, followed by heating or pressurization.

11. An electrolyzed water producing equipment using an electrolysis cell comprising a pair of electrolysis rooms located opposite to each other via an ion permeable membrane, raw water supply units for supplying the rooms with raw water, a pair of electrodes disposed in the respective electrolysis rooms with the membrane interposed therebetween, and electrolyzed water discharge units for taking out the electrolyzed water, which has been obtained by applying a voltage to the electrodes to electrolyze the raw water fed to the respective rooms by the raw water supply units, from the electrolysis rooms, wherein the membrane is an anion exchange membrane, the electrodes adhere firmly to both surfaces of the anion exchange membrane to form a membrane-electrode structure through which anions can permeate, and at least the raw water fed to the electrolysis room on the cathode side contains a chloride as an electrolyte.
